(19) **Europäisches Patentamt**

**European Patent Office**

**Office européen des brevets**

(11) Publication number: **0 361 349 B1**

(12) **EUROPEAN PATENT SPECIFICATION**

(45) Date of publication of patent specification: **24.05.95** (51) Int. Cl.6: **C01B 31/30**, C21B 15/00

(21) Application number: **89117637.2**

(22) Date of filing: **25.09.89**

(54) Magnetic fine particles of epsilon' iron carbide.

(30) Priority: **26.09.88 JP 241789/88**
**28.08.89 JP 222650/89**

(43) Date of publication of application:
**04.04.90 Bulletin 90/14**

(45) Publication of the grant of the patent:
**24.05.95 Bulletin 95/21**

(84) Designated Contracting States:
**DE FR GB NL**

(56) References cited:

**J. PHYS. CHEM., vol. 64, November 1960, pages 1720-1722; W.D. JOHNSTON et al.:"The preparation of fine powder hexagonal Fe2C and its coercive force"**

**J. AMER. CHEM. SOC., vol. 81, 5th April 1959, pages 1576-1582, Gaston, PA,US;L.J.E. HOFER et al.: "Saturation magnetizations of iron carbides"**

**J. AMER. CHEM. SOC., vol. 71, January 1949, pages 189-195, Gaston, PA, US; L.J.E. HOFER et al.: "The modification of the carbide, Fe2C; their properties and identification"**

(73) Proprietor: **SEISAN KAIHATSU KAGAKU KEN-KYUSHO**
**15, Shimogamo Morimoto-cho**
**Sakyo-ku**
**Kyoto-shi**
**Kyoto-fu 606 (JP)**

Proprietor: **KYODO OXYGEN CO., LTD.**
**1850, Minato**
**Wakayama-shi**
**Wakayama-ken (JP)**

(72) Inventor: **Tomiku, Yasushi**
**403-1-112, Nishinosho**
**Wakayama-shi**
**Wakayama-ken (JP)**
Inventor: **Takano, Hideaki**
**1089-6, Nishinosho**
**Wakayama-shi**
**Wakayama-ken (JP)**
Inventor: **Bando, Yoshichika**
**8-15, Koyo-cho**
**Ohtsu-shi**
**Shiga-ken (JP)**

(74) Representative: **VOSSIUS & PARTNER**
**Postfach 86 07 67**
**D-81634 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to magnetic fine particles of $\epsilon'$ iron carbide.

As magnetic recording materials, magnetic metal oxides or metals such as acicular $\gamma\text{-}Fe_2O_3$, $CrO_2$, $\alpha\text{-}Fe$ and the like are used.

Since $\gamma\text{-}Fe_2O_3$ has small coercive force, shape anisotropy has to be induced through increase of its acicular ratio or crystalline anisotropy has to be imparted through coating of particle surfaces with cobalt oxide.

Although $CrO_2$ has good magnetism and particle shape (acicular shape), its Curie temperature is low so that its characteristics considerably depend on temperature. Therefore, the magnetic recording medium comprising $CrO_2$ as the magnetic material should be used under very limited conditions. Further, a magnetic layer containing $CrO_2$ particles wears a magnetic head heavily, and the Cr(IV) formed pollutes the environment.

Since $\alpha\text{-}Fe$ powder has a larger coercive force and at least twice larger value of magnetization than $\gamma\text{-}Fe_2O_3$, it will satisfy requirements for high density recording. However, since the metal powder has high chemical reactivity, its production process is somewhat complicated and the powder should be carefully treated. After the formation of a magnetic layer, deterioration due to oxidation should be prevented and abrasion because of softness of metal should be prevented. Further, the specific surface area of $\alpha\text{-}Fe$ acicular particles to be used in an 8 mm video tape should be increased. However, according to the conventional method, increase of the specific surface area of $\alpha\text{-}Fe$ powder will lead to decrease of magnetization, and at a specific surface area of 80 to 100 $m^2/g$, $\alpha\text{-}Fe$ powder tends to be converted to simple iron oxide. Then, such defects should be removed (see Tatsuji KITAMOTO, "Kagaku Sosetsu" (Survey on Chemistry) No. 48, "Fine Grain, its Chemistry and Applications", edited by the Chemical Society of Japan, Gakkaishuppan Center (1985)).

With respect to the acicular magnetic particles for magnetic recording which utilizes shape magnetic anisotropy and is said to have been first proposed in JP-B-776/1951, the acicular particles suffer from the above described defects or print through. At present, decrease of the particle size has its limit.

Iron carbide for magnetic recording includes spherical iron carbide (US-A-3,572,993) and iron carbide comprising $\chi\text{-}Fe_5C_2$ (JP-A-111923/1986). Both of them comprise $\chi\text{-}Fe_5C_2$ as the main component and are mixture of said main component and other iron carbide such as $\epsilon\text{-}Fe_2C$, $\epsilon'\text{-}Fe_{2.2}C$, $\theta\text{-}Fe_3C$, etc. Then, they are expressed by a composition formula: $Fe_xC$ wherein x is a number not smaller than 2 and not larger than 3.

The spherical iron carbide is of fine particles having an average particle size of 0.005 to 0.1 $\mu m$ and has a coercive force of 39.79 to 55.7 kA/m (500 to 700 Oe), which is smaller than the reported coercive force of iron carbide (J. Phys. Chem., Vol. 64, 1720 (1960)). It is produced by reacting a steamed aggregate of iron carbonyl with carbon monoxide or a mixture of carbon monoxide and hydrogen. It is dangerous to use iron carbonyl which easily ignites and explodes in air.

The iron carbide comprising $\chi\text{-}Fe_5C_2$ partly contains fine particles having an average particle size of 0.1 to 5 $\mu m$ and an average axial ratio of 1.0 to 3.0 or more than 3. However, most of the particles cannot be fine grains. It has magnetic characteristics such as saturation magnetization of 50 to 90 $Am^2/kg$ (emu/g) and coercive force of 31.8 to 71.6 kA/m (400 to 900 Oe). In addition, the magnetic characteristics largely scatter.

The iron carbide comprising $\chi\text{-}Fe_5C_2$ can be produced by reducing iron oxyhydroxide or iron oxide with hydrogen and reacting the reduced product with a reducing and carbonizing agent containing carbon and optionally hydrogen. Since the reduction with hydrogen is carried out in a temperature range from 200 to 700°C, at higher temperature, the particles tend to be sintered together. Further, since the carbonization temperature is comparatively high such as 250 to 400°C, the particle size distribution is broadened or carbon is deposited at a high deposition rate, which make it difficult to control the composition of the final product. Thereby, the magnetic characteristics scatter, and the deposited carbon deteriorates the magnetic characteristics. In addition, the product contains a fair amount of $Fe_3O_4$ and carbon which further makes it difficult to control the composition.

As described above, many processes for producing iron carbide have been proposed. However, by the conventional processes, only the iron carbide comprising $\chi'\text{-}Fe_5C_2$ as the main component can be obtained, and by-products such as $\epsilon'\text{-}Fe_2C$, $\epsilon'\text{-}Fe_{2.2}C$, $\theta\text{-}Fe_3C$ and the like are present as mixed phases in $\epsilon'\text{-}Fe_5C_2$, which by-products cannot be isolated.

According to J. Amer. Chem. Soc., vol. 81, 1576 (1959), the value of saturation magnetization of the carbide phase is larger in the order of $\epsilon'\text{-}Fe_{2.2}C > \theta\text{-}Fe_3C > \chi\text{-}Fe_5C_2$. Therefore, $\epsilon'$ iron carbide is highly promising as a magnetic recording element.

One object of the present invention is to provide magnetic fine particles of $\epsilon'$ iron carbide which is present in a single phase, that is, without mixing of $Fe_3C$ and/or $\chi$-$Fe_5C_2$.

Another object of the present invention is to provide a process for producing magnetic fine particles of $\epsilon'$ iron carbide which is present in a single phase.

Accordingly, the present invention provides acicular magnetic fine particles of $\epsilon'$ iron carbide represented by the composition formula: $\epsilon'$-$Fe_{2.2}C$ which have an average particle size of 0.03 to 0.2 $\mu$m, and processes for producing such magnetic fine particles of $\epsilon'$ iron carbide.

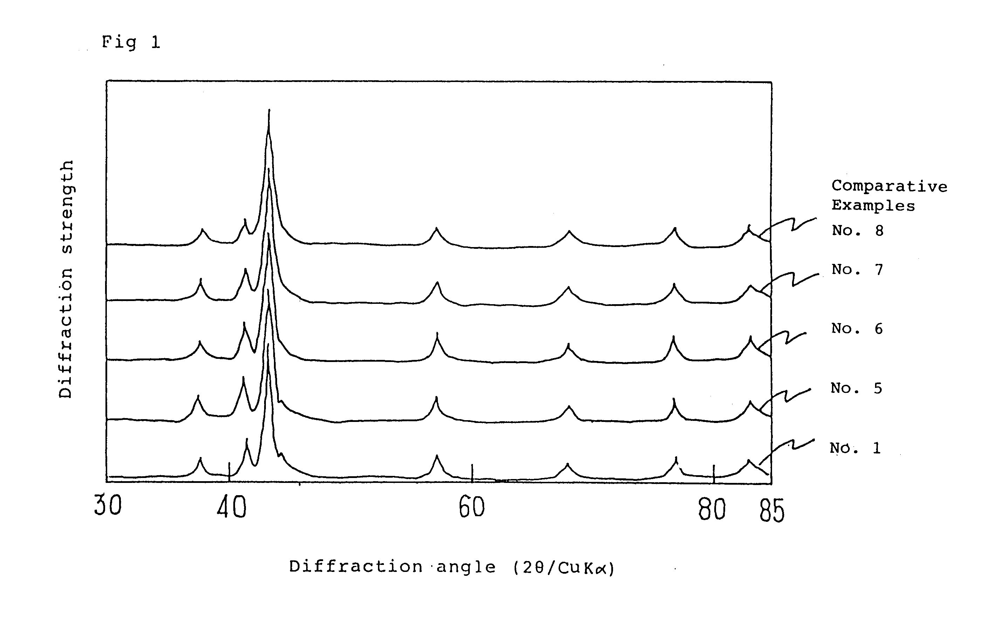

Figs. 1 to 3 show X-ray diffraction patterns of $\epsilon'$ iron carbide powders prepared in the respective Examples and Comparative Examples.

In one of preferred embodiments, the $\epsilon'$ iron carbide of the present invention contains at least one other metal which is present in a solid solution state in iron.

The $\epsilon'$ iron carbide of the present invention preferably has a major axis of not longer than 0.5 $\mu$m and an axial ratio of not smaller than 4. When the major axis is longer than 0.5 $\mu$m, the particle size increases so that the high recording density cannot be achieved or the particle has multi magnetic domains so that the magnetic properties tend to decrease, although the acicular ratio is increased. When the axial ratio is smaller than 4, the shape magnetic anisotropy is decreased so that a large coercive force cannot be expected.

In a process for producing the $\epsilon'$ iron carbide according to the present invention, $\alpha$-Fe having an average particle size of 0.03 to 0.2 $\mu$m is reacted with a reducing and carbonizing agent containing carbon and optionally a reducing agent containing no carbon at a temperature of not higher than 250°C, preferably from 200 to 250°C.

Examples of the reducing and carbonizing agent are a mixture of carbon monoxide and hydrogen, an organic compound which is conventionally used as the reducing and carbonizing agent (eg. methane, acetylene, etc.). Examples of the reducing agent containing no carbon are hydrogen.

To produce the $\epsilon'$ iron carbide of the present invention having the major axis of not longer than 0.5 $\mu$m and the axial ratio of not smaller than 4, the $\alpha$-Fe particles having the major axis of not longer than 0.5 $\mu$m and the axial ratio of not smaller than 4 and applied with a sintering preventing agent are used. The sintering preventing agent may be the same as described below.

The $\alpha$-Fe particles having an average particle size of 0.03 to 0.2 $\mu$m can be prepared by reducing acicular iron oxyhydroxide or iron oxide having an average particle size of 0.01 to 1.0 $\mu$m to $\alpha$-Fe or a mixture of $\alpha$-Fe and $Fe_3O_4$ with a reducing agent containing no carbon. In this reduction process, $Fe_3O_4$ forms a very thin film on particle surfaces as reduction proceeds. However, the presence of $Fe_3O_4$ has no influence on the production of the $\epsilon'$ iron carbide of the present invention in the subsequent reduction of $\alpha$-Fe. A temperature in this reduction is preferably from 200 to 300°C. When the temperature is too high, the particles are sintered together so that the $\alpha$-Fe particles have an average particle size larger than 0.2 $\mu$m. When the temperature is too low, the reduction cannot be effected.

When the acicular iron oxyhydroxide or iron oxide particles have a major axis of not longer than 0.5 $\mu$m and an axial ratio of not smaller 4, the produced $\alpha$-Fe particles have corresponding major axis and axial ratio. In this case, the reducing temperature is preferably from 200 to 700°C, more preferably from 400 to 600°C.

Examples of acicular oxyhydroxide are $\alpha$-, $\beta$- and $\gamma$-FeO(OH). Examples of the iron oxide are $\alpha$- and $\gamma$-$Fe_2O_3$ and $Fe_3O_4$.

In the above processes, at any stage, at least one metal other than iron (e.g. Ni, Co, Cu, Cr, Zn, etc.) can be added to the Fe-base raw materials or intermediates to have the other metal present in a solid solution state. The solid solution can be formed by a conventional method such as coprecipitation.

Alternatively, the $\alpha$-Fe particles having the above specific average particle size can be prepared by reducing fine particles of $\delta$-FeO(OH) prepared by the oxidation of ferrous hydroxide, which has been prepared through neutralization of a solution of a ferrous salt (e.g. sulfate, nitrate, chloride, perchlorate, etc.) and an alkali solution (e.g. NaOH, KOH, etc.), with an oxidizing agent (e.g. hydrogen peroxide, ammonium peroxodisulfate, etc.) to form $\delta$-FeO(OH), optionally applying a sintering preventing agent on the $\delta$-FeO(OH) particles or heating and dehydrating said particles, and then reducing the $\delta$-FeO(OH) with the reducing agent containing no carbon to $\alpha$-Fe or a mixture of $\alpha$-Fe and $Fe_3O_4$.

Ferrous hydroxide can be prepared through the neutralizing reaction between the ferrous salt solution and the alkali solution, but is easily oxidized and very unstable in the air. According to Shoichi Okamoto, Kagaku Kogaku Zassi, vol. 67, 1845 (1964), ferrous hydroxide is topotactically oxidized quickly with hydrogen peroxide at a temperature of 50°C or lower to form $\delta$-FeO(OH). In this reaction, before and after oxidation, the shape of the fine particles does not change, and formed $\delta$-FeO(OH) is stable in the air. In addition, only when the alkali is present in excess, single phase $\delta$-FeO)OH) can be formed, and iron can

EP 0 361 349 B1

contain various metals as solid solutions. The above alternative process is based on such findings.

The reason why the sintering preventing agent is used is that the $\delta$-FeO(OH) particles which trace the shape of the ferrous hydroxide particles tend to be sintered together and therefore suffer from change of particle shape and increase of particle size. The sintering preventing agent has no influence on formation of the $\epsilon'$ iron carbide of the present invention.

Examples of the sintering preventing agent are silicon compounds (e.g. sodium silicate, potassium silicate, silane-coupling agents, etc.), aluminum compounds (e.g. sodium aluminate, potassium aluminate, aluminum based coupling agents, etc.), phosphorus compounds (e.g. phosphate esters, phosphate salts, etc.), titanium compounds (e.g. titanium based coupling agents), boron compounds (e.g. a reaction product of boric acid with a polyhydric alcohol having neighboring hydroxyl groups such as glycerin, for example, polyoxyethyleneglycerol borate laurate, polyoxyethyleneglycerol borate stearate), aliphatic carboxylic acids and their salts (e.g. aliphatic acids having 12 to 20 carbon atoms and their alkali metal salts, alkaline earth metal salts or ammonium salt, such as oleic acid, coconut oil fatty acid, sodium oleate), or mixtures thereof. The sintering preventing agent can be applied to the particle by dispersing the particles in a solution of the sintering preventing agent at a suitable concentration. The pH of the suspension can be adjusted at 6 to 7. Then, the suspension is washed with water and filtered, and the filtered particles are dried and ground.

The dehydration temperature is preferably from 250 to 700°C, more preferably from 400 to 600°C. When the dehydration temperature is lower than the above lower limit, the product forms a mixed phase of $\delta$-FeO(OH), $\alpha$-FeO(OH) and $\alpha$-Fe$_2$O$_3$, and the reactivity in the subsequent reduction is deteriorated. When the dehydration temperature is higher than the above upper limit, the particles are considerably sintered together and form large particles.

The reduction of the iron oxide with the reducing agent containing no carbon is carried out preferably at a temperature of 300 to 700°C, more preferably 450 to 600°C. When the temperature is lower than the lower limit, the iron oxide is insufficiently reduced so that $\alpha$-Fe$_2$O$_3$ or Fe$_3$O$_4$ remains, and thereby the reactivity in the subsequent carbonization is decreased. When the temperature is higher than the upper limit, the particles are considerably sintered together and form larger particles so that the $\alpha$-Fe having an average particle size of 0.01 to 0.2 $\mu$m cannot be obtained.

The following experiments explain the dependency of formed phases or iron carbide on the temperature in the carbonizing step.

Experiment 1

To an aqueous solution of ferrous sulfate (FeSO$_4$.7H$_2$O) (concentration: 0.4 mol/l) (1000 ml), an aqueous solution of sodium hydroxide (concentration: 1.6 mol/l) (1000 ml) was added for neutralizing the ferrous sulfate solution to obtain an aqueous suspension of ferrous hydroxide (Fe(OH)$_2$). To this suspension, an aqueous solution of hydrogen peroxide in an amount sufficient for oxidizing ferrous hydroxide in one portion to obtain a brown precipitate. The precipitate was washed with water till pH of the washing water became about 7. To the washed precipitate (20 g), an aqueous solution of sodium silicate (concentration: 0.2 %) (2000 ml) was added, and the mixture was well stirred and filtered, followed by drying at room temperature. The X-ray diffraction pattern of this sample corresponded to that of $\delta$-FeO(OH) in ASTM X-ray Powder Data File 13-87. From the electron microscopic photograph, the average particle size was about 0.02 $\mu$m.

The sample was heated and dehydrated at 600°C by bubbling the air in the solution and then reduced in a hydrogen stream to $\alpha$-Fe. Thereafter, the $\alpha$-Fe particles were further carbonized with a mixture of carbon monoxide and hydrogen (volume ratio of 1:1) at various temperatures shown in Table 1. The product was identified with the X-ray diffraction analysis. The results are shown in Table 1.

4

EP 0 361 349 B1

Table 1

| Temperature (°C) | Phases of iron carbide |
|---|---|
| 180 | $\epsilon'$-$Fe_{2.2}C > \alpha$-Fe |
| 210 | $\epsilon'$-$Fe_{2.2}C$ |
| 240 | $\epsilon'$-$Fe_{2.2}C \gg \chi$-$Fe_5C_2$ |
| 280 | $\chi$-$Fe_5C_2 \gg \epsilon'$-$Fe_{2.2}C$ |
| 330 | $\chi$-$Fe_5C_2 \gg \theta$-$Fe_3C$ |
| 400 | $\theta$-$Fe_3C \gg \chi$-$Fe_5C_2$ |
| 450 | $\theta$-$Fe_3C$ |

Since the phases in the iron carbide produced through carbonization vary with the gas composition to be used for carbonization and raw materials, the above results are not necessarily applied to other cases, and it is very difficult to select critical limits for various reaction conditions.

However, it can be said that, for the production of $\epsilon'$ iron carbide, the fine particles of $\alpha$-Fe should be present as the main raw material at the start of carbonization, and the carbonization should be carried out at a comparatively low temperature of not higher than 250°C.

Experiment 2

A raw material consisting of $\alpha$-$Fe_2O_3$ particles having an average particle size of 0.5 $\mu$m was reduced in the hydrogen stream to $\alpha$-Fe and then carbonized with a mixture of carbon monoxide and hydrogen (volume ratio of 1:1) at various temperatures as in Experiment 1. The product was identified by X-ray diffraction analysis. The results are substantially the same as in Experiment 1.

The present invention will be explained in detail by following examples.

Comparative Example 1

In a ceramic boat, $\alpha$-FeO(OH) powder having an average particle size of 0.5 $\mu$m and an axial ratio of 10 (2 g) was charged and then heated and dehydrated in a tube heater at 280°C for 2 hours to obtain $\alpha$-$Fe_2O_3$ powder. After replacing the interior atmosphere of the heater with nitrogen, the $\alpha$-$Fe_2O_3$ powder was heated to 300°C and then reduced with hydrogen at the same temperature for 4 hours.

The product was subjected to X-ray diffraction and Mössbauer spectroscopy to confirm that the most part consisted of $\alpha$-Fe. From the results of X-ray diffraction and electron microscopic photograph, the average particle size was calculated to be about 0.02 $\mu$m.

The product was cooled to 210°C and reacted with a mixture of carbon monoxide and hydrogen (volume ratio of 1:1) for 3 hours followed by cooling down to room temperature to obtain black powder having an average particle size of 0.02 $\mu$m.

The X-ray diffraction pattern of the produced iron carbide powder is shown in Fig. 1. According to the X-ray diffraction analysis, the lattice spacings were 2.37, 2.16, 2.08, 1.60, 1.37, 1.24 and 1.16 $10^{-10}$ m (Å). They coincide well with the lattice spacings of $\epsilon'$-$Fe_{2.2}C$ of 2.38, 2.16, 2.08, 1.60, 1.37, 1.24 and 1.16 $10^{-10}$ m (Å) which are reported by Hofer et al in J. Amer. Chem. Soc., vol 71, 189 (1949).

The magnetic characteristics of the black powder were measured with a sample-vibration type magnetometer. The black powder had saturation magnetization of 112.0 $Am^2/kg$ (emu/g), residual magnetization of 57.1 $Am^2/kg$ (emu/g) and coercive force of 82.44 kA/m (1036 Oe).

Comparative Example 2

In the same ceramic boat, the same $\alpha$-FeO(OH) powder as used in Comparative Example 1 was charged. After replacing the interior atmosphere in the heater with nitrogen, the powder was heated to 340°C and treated with the mixture of carbon monoxide and hydrogen (volume ratio of 1:1) at the same temperature for 5 hours.

According to the X-ray diffraction, the produced powder consisted of $Fe_3O_4$ and $\chi$-$Fe_5C_2$ and has an average particle size of 0.04 $\mu$m. The powder had saturation magnetization, residual magnetization and

5

coercive force of 68.3 Am$^2$/kg (emu/g), 25.6 Am$^2$/kg (emu/g) and 42.2 kA/m (530 Oe), respectively.

Comparative Example 3

In the same manner as in Comparative Example 1 but treating the $\alpha$-FeO(OH) powder with the mixture of carbon monoxide and hydrogen at 340°C, the iron carbide powder was produced.

The produced iron carbide powder had the X-ray diffraction pattern corresponding to $\chi$-Fe$_5$C$_2$ and an average particle size of 0.02 $\mu$m. The powder had saturation magnetization, residual magnetization and coercive force of 92.3 Am$^2$/kg (emu/g), 42.5 Am$^2$/kg (emu/g) and 64.45 kA/m (810 Oe), respectively.

Comparative Example 4

In the same manner as in Comparative Example 1 but using a mixture of carbon monoxide and hydrogen in a volume ratio of 1:4, the iron carbide powder was produced.

The powder had saturation magnetization, residual magnetization and coercive force of 116.6 Am$^2$/kg (emu/g), 58.2 Am$^2$/kg (emu/g) and 83.55 kA/m (1050 Oe), respectively. The intermediate product ($\alpha$-Fe) and the final product ($\epsilon'$-Fe$_{2.2}$C) had substantially the same properties, for example, average particle size as those produced in Comparative Example 1.

Comparative Examples 5-8

In the same manner as in Experiment 1 but replacing 2, 6, 10 or 20 % by mole of iron elements in the starting material FeSO$_4$.7H$_2$O with nickel elements, FeSO$_4$.7H$_2$O was neutralized with sodium hydroxide to obtain an aqueous suspension of Fe(OH)$_2$ powder. Then the Fe(OH)$_2$ powder was oxidized in the air to obtain $\alpha$-FeO(OH) in the same manner as in Comparative Example 1. X-ray diffraction analysis confirmed that the whole product consisted of $\alpha$-FeO(OH) powder having substantially the same average particle size as that produced in Comparative Example 1. The axial ratio increased as the content of nickel elements increased, so that $\alpha$-FeO(OH) containing 20 % by mole of nickel elements had about twice larger axial ratio than that containing no nickel.

From the $\alpha$-FeO(OH) powder produced in the above, iron carbide was produced in the same manner as in Comparative Example 1. The X-ray diffraction patterns of the iron carbide powders prepared in Comparative Examples 5 through 8 are shown in Fig. 1.

The powder had saturation magnetization, residual magnetization and coercive force shown in Table 2.

Table 2

| Comparative Example No. | Nickel content (% by mole) | Saturation magnetization (Am$^2$/kg) | Residual magnetization (Am$^2$/kg) | Coercive force (79.6 A/m) |
|---|---|---|---|---|
| 5 | 2 | 114.2 | 51.1 | 972 |
| 6 | 6 | 120.1 | 50.5 | 919 |
| 7 | 10 | 126.4 | 50.4 | 900 |
| 8 | 20 | 122.6 | 48.9 | 790 |

In these Comparative Examples, it was confirmed that, as the content of nickel elements increased, the average particle sizes of the intermediate product ($\alpha$-Fe powder) and the final product ($\epsilon$ iron carbide) decreased.

Example 1

A 1.6 mol/l aqueous solution of sodium hydroxide (1 liter) was added to a 0.4 mol/l aqueous solution of ferrous sulfate (FeSO$_4$.7H$_2$O) (1 liter) to obtain a suspension of ferrous hydroxide (Fe(OH)$_2$). To this suspension, a 10 % aqueous solution of hydrogen peroxide (100 ml) was added in one portion to obtain a brown precipitate.

Then, the brown precipitate was mixed with water glass No. 3 (0.5 g), stirred, washed with water until the pH of the washing water became about 7 and filtered followed by drying at room temperature and grinding to obtain a sample.

The X-ray diffraction pattern of this sample corresponded to that of $\delta$-FeO(OH). From the electron microscopic photograph, the average particle size was about 0.03 $\mu$m.

In a ceramic boat, the sample powder was charged and then heated and dehydrated in a tube heater at 600°C for 3 hours to obtain $\alpha$-Fe$_2$O$_3$. After replacing the interior atmosphere of the heater with nitrogen, the temperature was lowered to 450°C and the $\alpha$-Fe$_2$O$_3$ powder was reduced with hydrogen. The X-ray diffraction of the product obtained in this step confirmed that the product consisted of a single phase of $\alpha$-Fe. From the electron microscopic photograph of the product, its average particle size was about 0.03 $\mu$m.

The product obtained in the above step was cooled to 210°C and then reacted with the mixture of carbon monoxide and hydrogen (volume ratio of 1:1) for 5 hours followed by cooling down to room temperature to obtain black powder having an average particle size of 0.03 $\mu$m.

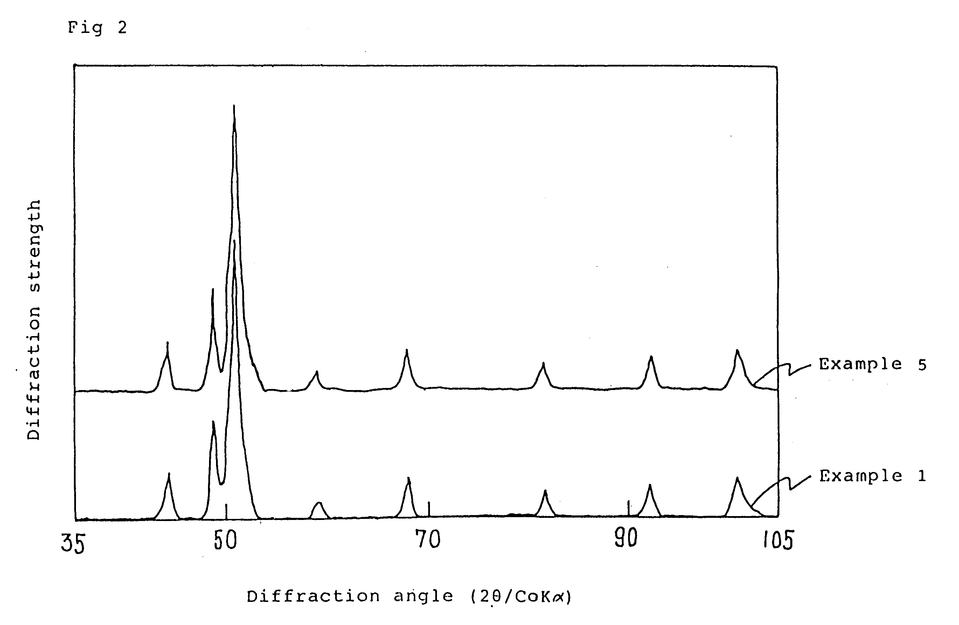

The X-ray diffraction pattern of the produced iron carbide powder is shown in Fig. 2. According to the X-ray diffraction analysis, the lattice spacings were 2.38, 2.17, 2.08, 1.60, 1.38, 1.24 and 1.16 10$^{-10}$m (Å). The black powder had saturation magnetization, residual magnetization and coercive force of 65.2 Am$^2$/kg (emu/g), 31.4 Am$^2$/kg (emu/g) and 98.68 kA/m (1240 Oe), respectively.

Examples 2 and 3

In the same manner as in Example 1 but dehydrating the $\delta$-FeO(OH) powder at 400°C (Example 2) or 500°C (Example 3), the iron carbide was produced.

The both products of Examples 2 and 3 had the X-ray diffraction pattern corresponding to that of $\epsilon'$-Fe$_{2.2}$Cand an average particle size of about 0.03 $\mu$m.

Examples 4

In the same manner as in Example 1 but reducing the $\delta$-FeO(OH) powder at 500°C, the iron carbide was produced.

The product had the X-ray diffraction patter corresponding to that of $\epsilon$-Fe$_{2.2}$C and an average particle size of about 0.03 $\mu$m.

Example 5

A 4.0 mol/l aqueous solution of sodium hydroxide (1 liter) was added to a 0.4 mol/l aqueous solution of ferrous sulfate (FeSO$_4$.7H$_2$O) (1 liter) to obtain a suspension of ferrous hydroxide (Fe(OH)$_2$). To this suspension, a 10 % aqueous solution of hydrogen peroxide (100 ml) was added in one portion to obtain a brown precipitate.

Then, the brown precipitate was mixed with water glass No. 3 (0.5 g), stirred, washed with water till pH of the washing water became about 7 and filtered, followed by drying at room temperature and grinding to obtain a sample.

The X-ray diffraction pattern of this sample corresponded to that of $\delta$-FeO(OH). From the electron microscopic photograph, the average particle size was about 0.05 $\mu$m.

In a ceramic boat, the sample powder was charged and then heated and dehydrated in a tube heater at 600°C for 3 hours to obtain $\alpha$-Fe$_2$O$_3$. After replacing the interior atmosphere of the heater with nitrogen, the temperature was lowered to 500°C and the $\alpha$-Fe$_2$O$_3$ powder was reduced with hydrogen. The reduced product was further cooled down to 210°C and reacted with a mixture of carbon monoxide and hydrogen (volume ratio of 1:1) for 5 hours followed by cooling down to room temperature to obtain black powder having an average particle size of 0.05 $\mu$m.

The X-ray diffraction pattern of the produced iron carbide powder is shown in Fig. 2.

The magnetic characteristics of the products of Examples 1 through 5 are summarized in Table 3.

Table 3

| Example No. | Saturation magnetization ($Am^2/kg$) | Residual magnetization ($Am^2/kg$) | Coercive force (79.6 A/m) |
|---|---|---|---|
| 1 | 65.2 | 31.4 | 1240 |
| 2 | 68.0 | 32.4 | 1170 |
| 3 | 66.7 | 31.9 | 1210 |
| 4 | 63.5 | 30.0 | 1260 |
| 5 | 102.4 | 48.5 | 1285 |

Comparative Example 9

$\alpha$-FeO(OH) powder having a major axis of 0.5 $\mu$m and an axial ratio of 10 (20 g) was dispersed in a 0.2 % aqueous solution of sodium silicate and pH of the dispersion was adjusted to about 5 with 1N HCl, followed by washing with water, filtration, drying and grinding to obtain sample powder.

In a ceramic boat, the sample powder was charged and then heated and dehydrated in a tube heater at 600°C for 3 hours to obtain $\alpha$-Fe$_2$O$_3$. After replacing the interior atmosphere of the heater with nitrogen, the $\alpha$-Fe$_2$O$_3$ powder was cooled down to 450°C and reduced with hydrogen at the same temperature for 1 (one) hour. The X-ray diffraction analysis confirmed that the product consisted of a single phase of $\alpha$-Fe. From the electron microscopic photograph, the product had the major axis of about 0.4 $\mu$m.

The reduced product was further cooled down to 210°C and reacted with a mixture of carbon monoxide and hydrogen (volume ratio of 1:1) for 5 hours followed by cooling down to room temperature to obtain black powder having a major axis of 0.4 $\mu$m and an axial ratio of 8.

According to the X-ray diffraction analysis, the lattice spacings were 2.38, 2.17, 2.08, 1.60, 1.38, 1.24 and 1.16 $10^{-10}$ m (Å). The powder had saturation magnetization, residual magnetization and coercive force of 117.6 $Am^2/kg$ (emu/g), 57.3 $Am^2/kg$ (emu/g) and 112.2 kA/m (1410 Oe), respectively.

Comparative Example 10

In the same manner as in Comparative Example 9 but treating the $\alpha$-FeO(OH) powder with the carbon monoxide/hydrogen mixture at 340°C, the iron carbide was produced.

The X-ray diffraction pattern corresponded to that of $\chi$-Fe$_5$C$_2$, and the product had an major axis of 0.4 $\mu$m and an axial ratio of 8. The powder had saturation magnetization, residual magnetization and coercive force of 101.5 $Am^2/kg$ (emu/g), 46.8 $Am^2/kg$ (emu/g) and 70.8 kA/m (890 Oe), respectively.

Example 6

In the same manner as in Comparative Example 9 but using a mixture of carbon monoxide and hydrogen in a volume ratio of 1:4, the iron carbide was produced.

The iron carbide powder had saturation magnetization, residual magnetization and coercive force of 121.8 $Am^2/kg$ (emu/g), 58.4 $Am^2/kg$ (emu/g) and 92.3 kA/m (1160 Oe), respectively.

Comparative Examples 11 and 12

In the same manner as in Comparative Example 9 but dehydrating the $\alpha$-FeO(OH) powder at 400°C (Example 14) or 500°C (Example 12), the iron carbide was produced.

The both products of Comparative Examples 11 and 12 had the X-ray diffraction pattern corresponding to that of $\epsilon'$-Fe$_{2.2}$C, a major axis of about 0.4 $\mu$m and an axial ratio of about 8.

Example 7

In the same manner as in Comparative Example 9 but using $\alpha$-FeO(OH) powder having a major axis of 0.25 $\mu$m and an axial ratio of 10, iron carbide was produced.

The product had the X-ray diffraction pattern corresponding to that of $\epsilon'$-$Fe_{2.2}C$, a major axis of about 0.2 $\mu$m and an axial ratio of about 8.

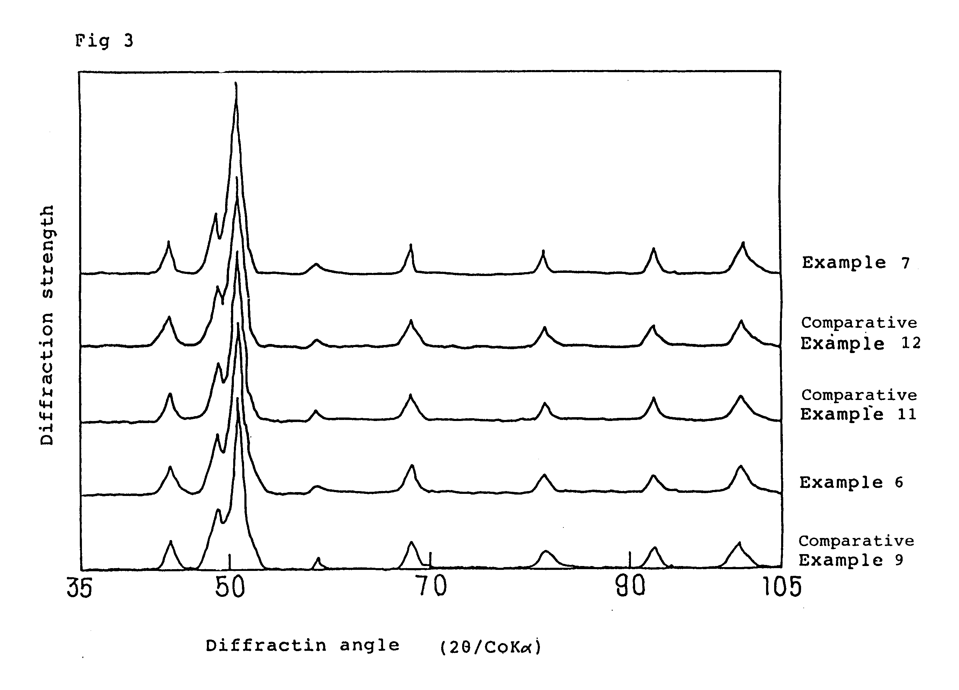

The X-ray diffraction patterns of the iron carbide powders produced in Comparative Examples 9, 11 and 12 and in Examples 6 and 7 are shown in Fig. 3.

The magnetic characteristics of the iron carbide powders produced in Examples 6 and 7 and in Comparative Examples 9 to 12 are summarized in Table 4.

Table 4

| Example No. | Saturation magnetization ($Am^2/kg$) | Residual magnetization ($Am^2/kg$) | Coercive force (79.6 A/m) |
|---|---|---|---|
| Comp. 9 | 117.6 | 57.3 | 1410 |
| Comp. 10 | 101.5 | 46.8 | 890 |
| 6 | 121.8 | 55.9 | 1160 |
| Comp. 11 | 110.4 | 51.0 | 1435 |
| Comp. 12 | 114.3 | 53.3 | 1450 |
| 7 | 105.7 | 50.0 | 1610 |

**Claims**

1. Magnetic fine particles of $\epsilon'$ iron carbide represented by the composition formula:

   $\epsilon'$-$Fe_{2.2}C$

   having an average particle size of 0.03 to 0.2 $\mu$m.

2. The magnetic fine particles of $\epsilon'$ iron carbide according to claim 1 which have a major axis of not longer than 0.5 $\mu$m and an axial ratio of not smaller than 4.

3. The magnetic fine particles of $\epsilon'$ iron carbide according to claim 1 or 2, wherein a part of iron atoms is replaced with atoms of at least one other metal.

4. A process for producing $\epsilon'$ iron carbide represented by the composition formula:

   $\epsilon'$-$Fe_{2.2}C$

   having an average particle size of 0.03 to 0.2 $\mu$m according to claim 1, 2, or 3, which process comprises reacting $\alpha$-Fe powder having an average particle size of 0.03 to 0.2 $\mu$m with a reducing and carbonizing agent containing carbon and optionally a reducing agent containing no carbon at a temperature of not higher than 250°C.

5. The process according to claim 4, wherein the $\alpha$-Fe powder is prepared by reducing an iron compound selected from the group consisting of acicular iron oxyhydroxide and iron oxide having an average particle size of 0.01 to 1.0 $\mu$m with a reducing agent containing no carbon.

6. The process according to claim 4, wherein the $\alpha$-Fe powder is prepared by oxidizing fine particles of ferrous hydroxide, which have been prepared through neutralization of a solution of a ferrous salt and an alkali solution, with an oxidizing agent to form $\delta$-FeO(OH), optionally applying an agent preventing agglomeration of particles during sintering on the $\delta$-FeO(OH) particles or heating and dehydrating said particles, and then reducing $\delta$-FeO(OH) with a reducing agent containing no carbon.

7. The process according to claim 5, which further comprises a step for introducing at least one other metal in the solid solution state in the starting material.

8. The process according to claim 5 or 6, which further comprises a step for introducing at least one other metal in the solid solution state in the starting material or the intermediate product.

9. The process according to claim 4, wherein the $\alpha$-Fe powder has a major axis of not longer than 0.5 $\mu$m and an axial ratio of not smaller than 4 and is applied with an agent before carbonization, said agent preventing agglomeration of particles during sintering.

10. The process according to claim 5, wherein the iron compound selected from the group consisting of acicular iron oxyhydroxide and iron oxide has a major axis of not longer than 0.5 $\mu$m and an axial ratio of not smaller than 4 and is applied with an agent before carbonization, said agent preventing agglomeration of particles during sintering.

11. The process according to claim 9 or 10, which further comprises a step for introducing at least one other metal in the solid solution state in the starting material or the intermediate product.

## Patentansprüche

1. Feine Magnetteilchen aus $\epsilon$'-Eisencarbid, die durch die Zusammensetzungsformel $\epsilon$'-$Fe_{2,2}C$ dargestellt sind und eine mittlere Teilchengröße von 0,03 bis 0,2 $\mu$m haben.

2. Feine Magnetteilchen aus $\epsilon$'-Eisencarbid nach Anspruch 1 mit einer Hauptachsenlänge von höchstens 0,5 $\mu$m und einem Achsenverhältnis von mindestens 4.

3. Feine Magnetteilchen aus $\epsilon$'-Eisencarbid nach Anspruch 1 oder 2, wobei Eisenatome teilweise durch Atome mindestens eines anderen Metalls ersetzt sind.

4. Verfahren zur Herstellung von $\epsilon$'-Eisencarbid, das nach Anspruch 1, 2 oder 3 durch die Zusammensetzungsformel $\epsilon$'-$Fe_{2,2}C$ dargestellt ist und eine mittlere Teilchengröße von 0,03 bis 0,2 $\mu$m aufweist, wobei das Verfahren aufweist: Reaktion von $\alpha$-Fe-Pulver mit einer mittleren Teilchengröße von 0,03 bis 0,2 $\mu$m mit einem kohlenstoffhaltigen Reduktions- und Aufkohlungsmittel und optional einem nicht kohlenstoffhaltigen Reduktionsmittel bei einer Temperatur von höchstens 250°C.

5. Verfahren nach Anspruch 4, wobei das $\alpha$-Fe-Pulver hergestellt wird durch Reduzieren einer Eisenverbindung, die ausgewählt ist aus der Gruppe, die aus nadelförmigem Eisenoxyhydroxid und Eisenoxid mit einer mittleren Teilchengröße von 0,01 bis 1,0 $\mu$m besteht, mit einem nicht kohlenstoffhaltigen Reduktionsmittel.

6. Verfahren nach Anspruch 4, wobei das $\alpha$-Fe-Pulver hergestellt wird durch Oxidieren feiner Teilchen aus Eisenhydroxid, die durch Neutralisierung einer Lösung eines Eisensalzes und einer Alkalilösung hergestellt wurden, mit einem Oxidationsmittel, um $\delta$-FeO(OH) zu bilden, wahlweise unter Auftragen eines Mittels zur Verhinderung des Zusammenbackens von Teilchen während des Sinterns auf die $\delta$-Feo(OH)-Teilchen oder Erwärmen und Dehydratisieren der Teilchen, und anschließendes Reduzieren von $\delta$-FeO(OH) mit einem nicht kohlenstoffhaltigen Reduktionsmittel.

7. Verfahren nach Anspruch 5, ferner mit einem Schritt zum Einführen mindestens eines anderen Metalls im Zustand fester Lösung in das Ausgangsmaterial.

8. Verfahren nach Anspruch 5 oder 6, ferner mit einem Schritt zum Einführen mindestens eines anderen Metalls im Zustand fester Lösung in das Ausgangsmaterial oder das Zwischenprodukt.

9. Verfahren nach Anspruch 4, wobei das $\alpha$-Fe-Pulver eine Hauptachsenlänge von höchstens 0,5 $\mu$m und ein Achsenverhältnis von mindestens 4 hat und vor dem Aufkohlen mit einem Auftrag eines Mittels zur Verhinderung des Zusammenbackens von Teilchen während des Sinterns versehen wird.

10. Verfahren nach Anspruch 5, wobei die Eisenverbindung, die ausgewählt ist aus der Gruppe, die aus nadelförmigem Eisenoxyhydroxid und Eisenoxid besteht, eine Hauptachsenlänge von höchstens 0,5 $\mu$m und ein Achsenverhältnis von mindestens 4 hat und vor dem Aufkohlen mit einem Auftrag eines Mittels versehen wird, wobei das Mittel das Zusammenbacken von Teilchen während des Sinterns verhindert.

**11.** Verfahren nach Anspruch 9 oder 10, ferner mit einem Schritt zum Einführen mindestens eines anderen Metalls im Zustand fester Lösung in das Ausgangsmaterial oder das Zwischenprodukt.

**Revendications**

**1.** Particules fines magnétiques de carbure de fer $\epsilon'$ représentées par la formule de composition :

$\epsilon'$ - $Fe_{2,2}C$

possédant une dimension de particule moyenne de 0,03 à 0,2 $\mu$m.

**2.** Particules fines magnétiques de carbure de fer $\epsilon'$ selon la revendication 1, qui possèdent un axe principal non supérieur à 0,5 $\mu$m et un rapport axial non inférieur à 4.

**3.** Particules fines magnétiques de carbure de fer $\epsilon'$ selon la revendication 1 ou 2, dans lesquelles une partie des atomes de fer est remplacée par des atomes d'au moins un autre métal.

**4.** Procédé de fabrication de carbure de fer $\epsilon'$ représenté par le formule de composition :

$\epsilon'$ - $Fe_{2,2}C$

ayant une dimension de particule moyenne de 0,03 à 0,2 $\mu$m selon l'une des revendications 1, 2 ou 3, procédé comportant les étapes consistant à faire réagir de la poudre de $\alpha$-Fe ayant une dimension de particule moyenne de 0,03 à 0,2 $\mu$m avec un agent réducteur et de carburation contenant du carbone et éventuellement un agent réducteur ne contenant pas de carbone à une température non supérieure à 250°C.

**5.** Procédé selon la revendication 4, dans lequel la poudre de $\alpha$-Fe est préparée en réduisant un composé de fer choisi parmi le groupe constitué d'oxyhydroxyde de fer aciculaire et d'oxyde de fer possédant une dimension de particule moyenne de 0,01 à 1,0 $\mu$m avec un agent réducteur ne contenant pas de carbone.

**6.** Procédé selon la revendication 4, dans lequel la poudre de $\alpha$-Fe est préparée en oxydant des fines particules d'hydroxyde ferreux, qui ont et- préparées par neutralisation d'une solution d'un sel ferreux et d'une solution alcaline, avec un agent oxydant pour former
$\delta$-FeO(OH), en appliquant facultativement un agent empêchant une agglomération de particules durant le frittage sur les particules $\delta$-FeO(OH) ou en chauffant et en déshydratant lesdites particules, et en réduisant ensuite le $\delta$-FeO(OH) avec un agent réducteur ne contenant pas de carbone.

**7.** Procédé selon la revendication 5, qui comporte en outre une étape d'introduction d'au moins un autre métal à l'état de solution solide dans le matériau de départ.

**8.** Procédé selon la revendication 5 ou 6, qui comporte en outre une étape d'introduction d'au moins un autre métal à l'état de solution solide dans le matériau de départ ou le produit intermédiaire.

**9.** Procédé selon la revendication 4, dans lequel la poudre de $\alpha$-Fe possède un axe principal non supérieur à 0,5 $\mu$m et un rapport axial non inférieur à 4 et est appliquée avec un agent avant carburation, ledit agent empêchant une agglomération de particules durant le frittage.

**10.** Procédé selon la revendication 5, dans lequel le composé de fer choisi parmi le groupe constitué d'oxyhydroxyde de fer aciculaire et d'oxyde de fer possède un axe principal non supérieur à 0,5 $\mu$m et un rapport axial non inférieur à 4 et est appliqué avec un agent avant carburation, ledit agent empêchant une agglomération de particules durant le frittage.

**11.** Procédé selon la revendication 9 ou 10, qui comporte en outre une étape d'introduction d'au moins un autre métal à l'état de solution solide dans le matériau de départ ou le produit intermédiaire.

Fig 1

Diffraction strength

Diffraction angle (2θ/CuKα)

Comparative Examples

No. 8

No. 7

No. 6

No. 5

No. 1

30    40    60    80  85

EP 0 361 349 B1

Fig 2

Fig 3

Example 7

Comparative Example 12

Comparative Example 11

Example 6

Comparative Example 9

Diffraction strength

Diffractin angle  (2θ/CoKα)

35   50   70   90   105